# EUROPEAN PATENT APPLICATION

(11) **EP 4 651 476 A1**
(43) Date of publication of application: **19.11.2025**
(21) Application number: 24861726.8
(22) Date of filing: 30.07.2024
(51) Int. Cl.: H04M 1/02

(54) **CONTROL METHOD, STORAGE MEDIUM AND ELECTRONIC DEVICE**

(30) Priority: 04.09.2023 CN 202311138887
(71) Applicant: Honor Device Co., Ltd., Shenzhen, Guangdong 518040 (CN)
(72) Inventor: LIU, Tianjiao, Shenzhen, Guangdong 518040 (CN); LIU, Changming, Shenzhen, Guangdong 518040 (CN); GUO, Mingming, Shenzhen, Guangdong 518040 (CN)
(74) Representative: Gill Jennings & Every LLP
(86) International application number: PCT/CN2024/108457
(87) International publication number: WO 2025/050881

(57) **Abstract**

This application relates to the field of outward-foldable screen technologies, and discloses a control method, a storage medium, and an electronic device. The method includes: When the electronic device performs primary-screen display, a secondary screen emit gate driver on array (emit gate driver on array, EOA) and a secondary screen gate driver on array (gate driver on array, GOA) are controlled to be in a one-on one-off state periodically. When the secondary screen EOA is turned on, the secondary screen GOA is turned off. To be specific, a display signal of the secondary screen EOA cannot act on a drive module because a path of the secondary screen GOA is disconnected. When the secondary screen EOA is turned off, the secondary screen GOA is turned on. To be specific, the drive module cannot obtain the display signal. According to this method, not only a display difference between a primary screen and a secondary screen that occurs because the secondary screen GOA and the secondary screen EOA are in a different operating state for a long time from a primary screen GOA and a primary screen EOA can be avoided, but also a problem that a secondary screen flashes a white screen in a color inversion mode can be avoided.

## Description

This application claims priority to Chinese Patent Application No. 2023111388876, filed with the China National Intellectual Property Administration on September 4, 2023 and entitled "CONTROL METHOD, STORAGE MEDIUM, AND ELECTRONIC DEVICE", which is incorporated herein by reference in its entirety.

### TECHNICAL FIELD

This application relates to the field of outward-foldable screen technologies, and in particular, to a control method, a storage medium, and an electronic device.

### BACKGROUND

An outward-foldable screen generally includes a primary screen and a secondary screen. When an electronic device configured with the outward-foldable screen is in a primary-screen display state, that is, when the primary screen displays an image, but the secondary screen does not display an image, the electronic device usually turns off a secondary screen gate driver on array (GOA) and a secondary screen emit gate driver on array (EOA) that are used to control secondary-screen display, to reduce power consumption of the electronic device.

However, if the electronic device is in the primary-screen display state for a long time, the secondary screen GOA and the secondary screen EOA may be in a different operating state for a long time from a primary screen GOA and a primary screen EOA that are used to control primary-screen display. Consequently, when the electronic device changes from the primary-screen display state to a full-screen display state, a display difference such as a color or luminance may occur between the primary screen and the secondary screen, and a visual effect is poor.

### SUMMARY

Embodiments of this application provide a control method, a storage medium and an electronic device.

According to a first aspect, this application provides a control method, applied to an electronic device. The electronic device includes an outward-foldable screen, the outward-foldable screen includes a first screen and a second screen, the first screen includes a first control unit configured to control the first screen to display an image, the second screen includes a second control unit configured to control the second screen to display an image, the first control unit includes a first signal module, a second signal module, and a drive module, the first signal module is configured to control connection/disconnection of a first path through which the second signal module communicates with the drive module, the second signal module sends a display signal to the drive module through the first path, the drive module is configured to: receive the display signal, and control, based on the display signal, the first screen to display an image, and the method includes: enabling the first signal module and the second signal module in the first control unit to run in an operating state alternately, corresponding to a first time period in which the second screen displays an image and the first screen does not display an image. The first time period includes N first time intervals and at least N-1 second time intervals, and the first time intervals and the second time intervals are continuously spaced apart from each other. The enabling the first signal module and the second signal module in the first control unit to run in an operating state alternately includes: In the first time interval, the first control unit indicates the first signal module to send the display signal to the drive module, and indicates the second signal module to control the first path to be disconnected; and in the second time interval immediately after the first time interval, the first control unit indicates the first signal module to stop sending the display signal to the drive module, and indicates the second signal module to control the first path to be connected.

In this embodiment of this application, when the electronic device is in a primary-screen display state, a secondary screen control unit is used to control a secondary screen EOA (the second signal module) and a secondary screen GOA (the first signal module) to be in a one-on one-off state periodically. This not only ensures that the secondary screen GOA and the secondary screen EOA are in an operating state periodically, but also ensures that a secondary screen displays no substantial image in a process in which the secondary screen GOA and the secondary screen EOA are in the operating state periodically. Therefore, according to the foregoing proposed control method, not only a display difference between a primary screen and a secondary screen that occurs because the secondary screen GOA and the secondary screen EOA are in a different operating state for a long time from a primary screen GOA and a primary screen EOA can be avoided, but also a problem that a secondary screen flashes a white screen when the electronic device is in a color inversion mode can be avoided.

In a possible implementation of the first aspect, the method further includes: The first control unit executes a first delay procedure in response to an indication signal indicating that the first control unit indicates the first signal module to send the display signal to the drive module and indicates the second signal module to control the first path to be disconnected, so that a first state in which the first signal module sends the display signal to the drive module and the second signal module controls the first path to be disconnected is maintained to last for a time corresponding to the first time interval; or the first control unit executes a second delay procedure in response to an indication signal indicating that the first control unit indicates the first signal module to stop sending the display signal to the drive module and indicates the second signal module to control the first path to be connected, so that a second state in which the first signal module stops sending the display signal to the drive module and the second signal module is indicated to control the first path to be connected is maintained to last for a time corresponding to the second time interval.

In a possible implementation of the first aspect, the enabling the first signal module and the second signal module in the first control unit to run in an operating state alternately, corresponding to a first time period in which the second screen displays an image and the first screen does not display an image includes: The first control unit indicates that the first signal module and the second signal module are in the first state; a 1st first delay procedure is run, so that the first state is maintained to last for the time corresponding to the first time interval; and a loop procedure is run in response to that the 1st first delay procedure ends. The loop procedure includes: at a start moment of an ith second time interval, in response to determining that the first signal module and the second signal module are in the first state, the first control unit indicates the first signal module and the second signal module to change from the first state to the second state, and runs an ith second delay procedure, so that the second state is maintained to last for the time corresponding to the second time interval; at a start moment of an (i+1)th first time interval, in response to determining that the first signal module and the second signal module are in the second state, the first control unit indicates the first signal module and the second signal module to change from the second state to the first state, and runs an (i+1)th first delay procedure, so that the first state is maintained to last for the time corresponding to the first time interval; and i is an integer greater than or equal to 1.

In a possible implementation of the first aspect, the method further includes: determining that the electronic device enters a non-primary-screen display state, and exiting the loop procedure. During exiting of the loop procedure, at a moment at which the loop procedure is exited, it is determined that the first signal module and the second signal module are in the first state, and the first control unit indicates the second signal module to control the first path to be connected; or at a moment at which the loop procedure is exited, it is determined that the first signal module and the second signal module are in the second state, and the first control unit indicates the first signal module to send the display signal to the drive module.

In a possible implementation of the first aspect, the method further includes: the first time interval is greater than the second time interval.

In a possible implementation of the first aspect, the electronic device is in a color inversion mode.

In a possible implementation of the first aspect, the first signal module is an emit gate driver on array (EOA), and the second signal module is a gate driver on array (GOA).

In a possible implementation of the first aspect, the first path is provided with a first switch, and the second signal module is configured to control the first switch to be turned on/off; one terminal of the first switch is connected to the first signal module, the other terminal is connected to a first capacitor and a second switch in the drive module, and the first capacitor or the first signal module is configured to control the second switch to be turned on/off; and the first screen may display an image corresponding to that the second switch is in an on state.

According to a second aspect, an embodiment of this application provides a readable storage medium. The readable storage medium stores instructions, and when the instructions are executed on an electronic device, the electronic device is enabled to implement any control method according to the first aspect and the various possible implementations of the first aspect.

According to a third aspect, an embodiment of this application provides an electronic device. The electronic device includes: a memory, configured to store instructions to be executed by one or more processors of the electronic device; and a processor, being one of the processors of the electronic device and configured to execute the instructions stored in the memory, to implement any control method according to the first aspect and the various possible implementations of the first aspect.

According to a fourth aspect, an embodiment of this application provides a program product. The program product includes instructions, and when the instructions are executed by an electronic device, the electronic device is enabled to implement any control method according to the first aspect and the various possible implementations of the first aspect.

### BRIEF DESCRIPTION OF DRAWINGS

FIG. 1 is a schematic structural diagram of an outward-foldable screen mobile phone 10 according to some embodiments of this application;
FIG. 2 is an example schematic diagram of an interface of a mobile phone 10 according to some embodiments of this application;
FIG. 3 is an example schematic diagram of a time interval according to some embodiments of this application;
FIG. 4 is an example schematic diagram of a control circuit according to some embodiments of this application;
FIG. 5 is a diagram of procedure steps of a control method according to some embodiments of this application; and
FIG. 6 is a schematic structural diagram of a mobile phone 10 according to some embodiments of this application.

### DESCRIPTION OF EMBODIMENTS

Illustrative embodiments of this application include but are not limited to a control method, a storage medium, and an electronic device.

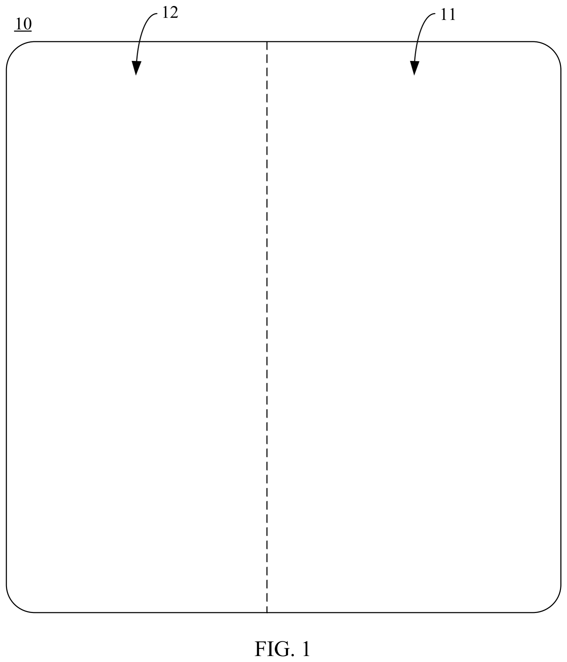

The following describes the technical solutions of this application with reference to the accompanying drawings FIG. 1 to FIG. 6.

FIG. 1 is a schematic structural diagram of an outward-foldable screen mobile phone (referred to as a mobile phone below) 10 according to some embodiments of this application. As shown in FIG. 1, an outward-foldable screen of the mobile phone 10 is divided into a primary screen 11 (an instance of a second screen) and a secondary screen 12 (an instance of a first screen). When the mobile phone 10 is in an unfolded state, the primary screen 11 and the secondary screen 12 simultaneously display an image. In other words, the mobile phone 10 is in a full-screen display state. When the mobile phone 10 is in a folded state, the secondary screen 12 is folded to a position that is invisible to a user in a normal use state. Therefore, only the primary screen 11 displays an image, but the secondary screen 12 does not display an image. In this case, the mobile phone 10 is in a primary-screen display state.

In some embodiments, the primary screen 11 and the secondary screen 12 are respectively configured with a primary screen control unit (an instance of a second control unit) and a secondary screen control unit (an instance of a first control unit) that are configured to control corresponding screen areas to display an image. For example, corresponding to the secondary screen 12, the secondary screen control unit may include a secondary screen GOA (an instance of a second signal module) used to control display of each pixel (for example, an organic light-emitting diode (organic light-emitting diode, OLED)) on the secondary screen 12, and a secondary screen EOA (an instance of a first signal module) used to control luminance of each pixel on the secondary screen 12. The secondary screen GOA and the secondary screen EOA may be used to control display of a plurality of pixels on the secondary screen 12, to display an image on the secondary screen 12. Correspondingly, corresponding to the primary screen 11, the primary screen control unit also includes a primary screen GOA and a primary screen EOA that are used to control display and luminance of each pixel on the primary screen 11. The primary screen GOA and the primary screen EOA may be used to control display of a plurality of pixels on the primary screen 11, to display an image on the primary screen 11.

In some embodiments, when the mobile phone 10 is in the primary-screen display state, and only the primary screen 11 displays an image, the mobile phone 10 may control, by using the secondary screen control unit, the secondary screen GOA and the secondary screen EOA to be turned off, so that the secondary screen 12 does not display an image, that is, the secondary screen 12 displays a black screen, to achieve an effect of low power consumption. It may be understood that when the primary screen 11 displays an image and the secondary screen 12 does not display an image, the primary screen GOA and the primary screen EOA are in an operating state, so that the primary screen GOA and the primary screen EOA are used to control display of the plurality of pixels on the primary screen 11, to display the image on the primary screen 11. Correspondingly, because the secondary screen 12 does not display an image, the secondary screen control unit such as the secondary screen GOA and the secondary screen EOA are in a non-operating state.

It may be understood that when the mobile phone 10 is in the primary-screen display state for a long time, the primary screen GOA and the primary screen EOA in the primary screen control unit may be in a different operating state for a long time from the secondary screen GOA and the secondary screen EOA in the secondary screen control unit. Therefore, after the mobile phone 10 is in the primary-screen display state for a long time, if the mobile phone 10 changes from the primary-screen display state to the full-screen display state, a problem, for example, the primary screen GOA and the primary screen EOA have a different aging degree from the secondary screen GOA and the secondary screen EOA may occur because the primary screen GOA and the primary screen EOA are in a different operating state for a long time from the secondary screen GOA and the secondary screen EOA. Therefore, when the mobile phone 10 changes from the primary-screen display state to the full-screen display state, and the secondary screen control unit is used to control the secondary screen GOA and the secondary screen EOA, so that the secondary screen 12 displays an image, there may be a display difference between luminance and colors of images displayed on the secondary screen 12 and the primary screen 11. Consequently, for example, a screen has a display effect of a split feeling, and visual experience of a user is affected.

In some embodiments, when the mobile phone 10 is in the primary-screen display state, the mobile phone 10 may periodically turn on the secondary screen GOA and the secondary screen EOA by using the secondary screen control unit, and when the secondary screen GOA and the secondary screen EOA are turned on, the secondary screen 12 is controlled to display a black image, to visually enable the secondary screen 12 to always display a black screen in a process in which the mobile phone 10 is in the primary-screen display state. For example, when the mobile phone 10 is in the primary-screen display state, the mobile phone 10 may control, by using the secondary screen control unit, the secondary screen GOA and the secondary screen EOA to be turned on for 5 seconds every 30 seconds, and control the secondary screen to display the black image within 5 seconds in which the secondary screen GOA and the secondary screen EOA are turned on. Therefore, when the mobile phone 10 is in the primary-screen display state, the mobile phone 10 periodically turns on the secondary screen GOA and the secondary screen EOA by using the secondary screen control unit, to prevent the secondary screen GOA and the secondary screen EOA from being in a different operating state for a long time from the primary screen GOA and the primary screen EOA, and further avoid a display difference between the primary screen 11 and the secondary screen 12 when the primary-screen display state subsequently changes to the full-screen display state.

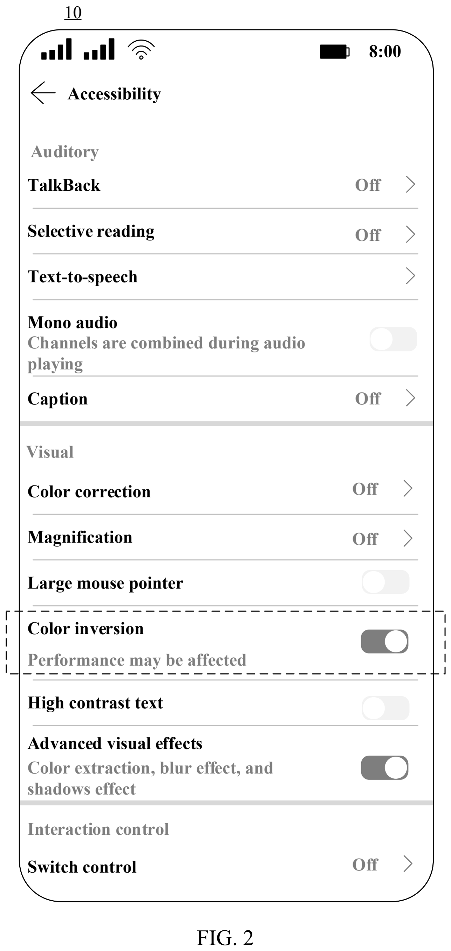

In some embodiments, when the mobile phone 10 is in the primary-screen display state, in a process in which the secondary screen GOA and the secondary screen EOA are periodically turned on, to prevent the secondary screen GOA and the secondary screen EOA from being in a different operating state for a long time from the primary screen GOA and the primary screen EOA, when a user of the mobile phone 10 turns on a color inversion function, for example, a color inversion function in an accessibility function of the mobile phone 10 (in a folded state) shown in FIG. 2, the mobile phone 10 is in a color inversion mode. In the color inversion mode, an originally bright pixel of the mobile phone 10 becomes dark while an originally dark pixel becomes bright. Therefore, when the mobile phone 10 turns on the secondary screen GOA and the secondary screen EOA by using the secondary screen control unit, to control the secondary screen 12 to display the black image, the black image displayed on the secondary screen 12 may become a white image due to the color inversion function, and consequently, when the mobile phone 10 is in the primary-screen display state, the secondary screen 12 periodically flashes the white image. It may be understood that when the mobile phone 10 is in the folded state and the primary-screen display state, if the secondary screen 12 continuously flashes a white screen (white image), trouble is brought to the user in a use process, and user experience is reduced.

Therefore, this application proposes a control method. When the mobile phone is in the primary-screen display state, the secondary screen control unit is used to control the secondary screen EOA and the secondary screen GOA to be in a one-on one-off state periodically. To be specific, when the secondary screen EOA is turned on, the secondary screen GOA is turned off, so that when the mobile phone sends a display signal by using the secondary screen EOA, the display signal cannot act on a corresponding drive module because a transmission path controlled by the secondary screen GOA is disconnected, that is, the secondary screen cannot be controlled to display an image. When the secondary screen EOA is turned off, the secondary screen GOA is turned on, so that when the mobile phone controls, by using the drive module, the secondary screen to display an image, a correct display signal cannot be obtained, that is, the secondary screen cannot be controlled to display an image. Therefore, according to the foregoing proposed control method, this not only ensures that the secondary screen GOA and the secondary screen EOA are in an operating state periodically, but also ensures that the secondary screen displays no substantial image in a process in which the secondary screen GOA and the secondary screen EOA are in the operating state periodically. Therefore, according to the foregoing proposed control method, not only the display difference between the primary screen and the secondary screen that occurs because the secondary screen GOA and the secondary screen EOA are in a different operating state for a long time from the primary screen GOA and the primary screen EOA can be avoided, but also a problem that the secondary screen flashes a white screen when the mobile phone is in the color inversion mode can be avoided.

In some embodiments, in a time period (an instance of a first time period) in which the mobile phone is in the primary-screen display state, the secondary screen EOA may be controlled to be turned on and the secondary screen GOA may be controlled to be turned off in a first time interval in each preset time period, and the secondary screen EOA is controlled to be turned off and the secondary screen GOA is controlled to be turned on in a second time interval immediately after the first time interval.

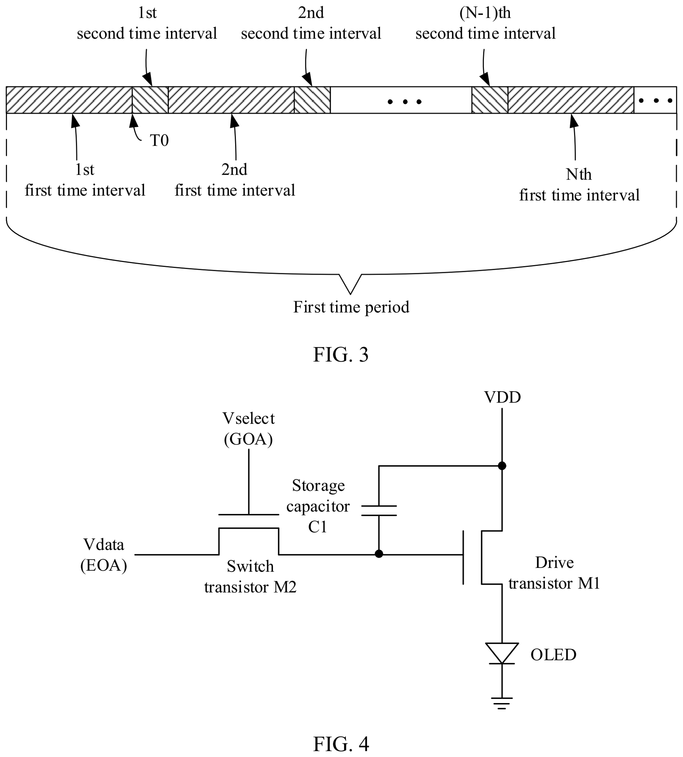

It may be understood that one first time interval and one second time interval immediately after the first time interval may be referred to as one time period. For example, as shown in FIG. 3, a 1st first time interval and a 1st second time interval immediately after the 1st first time interval may be referred to as one time period.

It may be understood that in one time period, the second time interval is immediately after the first time interval. That is, an end moment of the first time interval and a start time of the second time interval are a same time. For example, as shown in FIG. 3, if an end moment of the 1st first time interval is T0, a start time of the corresponding 1st second time interval is T0.

It may be understood that the first time period may include a plurality of consecutive time periods. In the plurality of consecutive time periods, a first time interval in a current time period is set adjacent to a second time interval in the current time period and a second time interval in a previous time period, and the first time interval in the current time period is spaced apart from a first time interval in the previous time period and a first time interval in a next time period. For example, as shown in FIG. 3, the 1st first time interval and the 1st second time interval immediately after the 1st first time interval are a time period A; a 2nd first time interval and a 2nd second time interval immediately after the 2nd first time interval are a time period B; the 2nd first time interval in the time period B is set adjacent to the 2nd second time interval in the time period B and the 1st second time interval in the time period A; and the 2nd first time interval in the time period B is spaced apart from the 1st first time interval in the time period A and a first time interval (for example, a 3rd first time interval) in a time period after the time period B. That is, in the plurality of consecutive time periods, a plurality of first time intervals and a plurality of second time intervals are continuously spaced apart from each other.

In some embodiments, when the mobile phone 10 is in the primary-screen display state, if the secondary screen EOA is turned on, the display signal sent by the secondary screen EOA is usually a display signal of the black image, that is, a current of the secondary screen EOA is small, and power consumption is small; and the corresponding secondary screen GOA is used to control connection/disconnection of a transmission path corresponding to the display signal, a current of the secondary screen GOA is large, and power consumption is large. In this way, a time of the first time interval in which the secondary screen EOA is controlled to be turned on and the secondary screen GOA is controlled to be turned off may be set greater than a time of the second time interval in which the secondary screen EOA is controlled to be turned off and the secondary screen GOA is controlled to be turned on, to achieve an effect of low power consumption. For example, the first time interval is 25 seconds, the second time interval is 5 seconds, and the corresponding time period is 30 seconds.

It may be understood that when the first time period is an integer multiple of a sum of the first time interval and the second time interval, a quantity of first time intervals is the same as a quantity of second time intervals. For example, if the first time period is 60 seconds, the first time interval is 25 seconds, and the second time interval is 5 seconds, there are two first time intervals and two second time intervals.

It may be understood that when the first time period is not an integer multiple of a sum of the first time interval and the second time interval, a quantity of first time intervals is different from a quantity of second time intervals. For example, if the first time period is 58 seconds, the first time interval is 25 seconds, and the second time interval is 5 seconds, there are two first time intervals and one second time interval.

In another embodiment, the first time period, the first time interval, and the second time interval may alternatively be another time range. This is not specifically limited.

In some embodiments, the mobile phone is merely an example of an electronic device configured with an outward-foldable screen. In another embodiment, the electronic device configured with an outward-foldable screen may further include a tablet computer, a wearable device, a vehicle-mounted device, an augmented reality (AR)/virtual reality (VR) device, a notebook computer, an ultra-mobile personal computer (UMPC), a netbook, a personal digital assistant (PDA), a dedicated camera (for example, a single-lens reflex camera, a card digital camera), or the like. This is not specifically limited.

The following explains and describes some embodiments of this application by using the mobile phone 10 shown in FIG. 1 or FIG. 2 as an example of the electronic device configured with an outward-foldable screen.

FIG. 4 is a diagram of a control circuit according to some embodiments of this application. As shown in FIG. 4, the control circuit includes at least a drive transistor M1, a switch transistor M2, an OLED, and a storage capacitor C1. It may be understood that a plurality of OLEDs are usually deployed on one screen, and each OLED corresponds to one pixel. The following explains and describes some embodiments of this application by using an OLED of a secondary screen 12 as an example.

In some embodiments, as shown in FIG. 4, a gate of the switch transistor M2 is connected to a scan line to receive a scan signal Vselect, a source of the switch transistor M2 is connected to a signal line to receive a display signal Vdata, and a drain of the switch transistor M2 is connected to a gate of the drive transistor M1. A source of the drive transistor M1 is connected to a power supply voltage terminal to receive a power supply voltage VDD, a drain of the drive transistor M1 is connected to a positive terminal of the OLED, and a negative terminal of the OLED is grounded. One terminal of the storage capacitor C1 is connected to the drain of the switch transistor M2 and the gate of the drive transistor M1, and the other terminal of the storage capacitor C1 is connected to the source of the drive transistor M1.

It may be understood that FIG. 4 is explained by using an example in which both the drive transistor M1 and the switch transistor M2 are P-type transistors. In another embodiment, the drive transistor M1 and the switch transistor M2 may alternatively be N-type transistors, or the drive transistor M1 and the switch transistor M2 may be respectively an N-type transistor and a P-type transistor. This is not specifically limited. It may be understood that when the drive transistor M1 or the switch transistor M2 is a P-type transistor, a circuit connection manner may be adaptively adjusted based on a source and a drain of the P-type transistor. For example, when the drive transistor M1 is a P-type transistor, the source of the drive transistor M1 is connected to the positive terminal of the OLED, and the drain is connected to the power supply voltage terminal.

With reference to the circuit diagram shown in FIG. 4, the following explains and describes a working principle of a secondary screen GOA and a secondary screen EOA by using an example in which a secondary screen control unit is used to control the secondary screen GOA and the secondary screen EOA to drive the secondary screen 12 to display an image.

In some embodiments, when a mobile phone 10 controls, by using the secondary screen control unit, the secondary screen GOA to apply the scan signal Vselect through the scan line, so that the switch transistor M2 is conducted (corresponding to that the secondary screen GOA is turned on), the secondary screen control unit may control the secondary screen EOA to send the display signal Vdata through the signal line (corresponding to that the secondary screen EOA is turned on). The display signal Vdata provides a potential value. After the switch transistor M2 is conducted, a potential difference is formed between two terminals of the storage capacitor C1, thereby charging the storage capacitor C1, to store a charge corresponding to the display signal Vdata in the storage capacitor C1. In addition, a potential provided by the display signal Vdata may be further applied to the gate of the switch transistor M2 to control the drive transistor M1 to be conducted. In this way, the power supply voltage VDD may be input to the OLED through the drive transistor M1, to drive a corresponding pixel to emit light, thereby controlling the secondary screen 12 to display the image.

In some embodiments, when the mobile phone 10 controls, by using the secondary screen control unit, the secondary screen GOA to stop applying the scan signal Vselect through the scan line, so that the switch transistor M2 is cut off (corresponding to that the secondary screen GOA is turned off), the corresponding secondary screen control unit controls the secondary screen EOA to also stop sending the display signal Vdata (corresponding to that the secondary screen EOA is turned off). Then, the storage capacitor C1 discharges to control, by using the stored display signal Vdata, the drive transistor M1 to be conducted, to maintain conduction of the drive transistor M1 when the secondary screen GOA and the secondary screen EOA are turned off. In this way, the power supply voltage VDD may be input to the OLED through the drive transistor M1, to stably drive a corresponding pixel to emit light, thereby controlling the secondary screen 12 to display the image.

That the secondary screen 12 is driven to display the image is explained and described below with reference to a plurality of circuits each having a corresponding single pixel shown in FIG. 4 and by using an example in which the storage capacitor C1 and the drive transistor M1 serve as units in the drive module.

In some embodiments, when the mobile phone 10 turns on the secondary screen GOA by using the secondary screen control unit, the corresponding display signal Vdata when the secondary screen EOA is turned on may be sent to the drive module. Each unit in the drive module may store the display signal Vdata, and drive, based on the display signal Vdata, each pixel of the secondary screen 12 to emit light correspondingly, to display the image. In some other embodiments, when the mobile phone 10 turns off the secondary screen GOA and the secondary screen EOA by using the secondary screen control unit, the display signal Vdata stored in the drive module is used to drive each pixel of the secondary screen 12 to emit light, to display the image.

A working principle of the secondary screen GOA and the secondary screen EOA is explained and described below with reference to the foregoing descriptions of the drive module and by using an example in which when the mobile phone is in the primary-screen display state, the secondary screen control unit is used to control the secondary screen GOA and the secondary screen EOA to be in a one-on one-off state periodically, so that the secondary screen 12 does not display the image.

In some embodiments, when the mobile phone 10 is in the primary-screen display state, the mobile phone 10 controls, by using the secondary screen control unit, the secondary screen EOA to send the display signal Vdata to the drive module through the signal line (corresponding to that the secondary screen EOA is turned on), and controls the secondary screen GOA to stop applying the scan signal Vselect through the scan line, so that the switch transistor M2 is cut off (corresponding to that the secondary screen GOA is turned off), that is, a target path (an instance of the first path) connecting the secondary screen EOA and the drive module is disconnected. In this way, because the target path is disconnected, the display signal Vdata cannot be sent to the drive module, and the drive module cannot store the display signal Vdata either. That is, the drive module cannot drive the secondary screen 12 to display the image. That is, the secondary screen 12 displays a black screen. It may be understood that in a process of turning on the secondary screen EOA and turning off the secondary screen GOA, the secondary screen EOA in the secondary screen control unit is in an operating state.

In some embodiments, after the secondary screen EOA is turned on and the secondary screen GOA is turned off for a specific time, the mobile phone 10 controls, by using the secondary screen control unit, the secondary screen EOA to stop sending the display signal Vdata to the drive module through the signal line (corresponding to that the secondary screen EOA is turned off), and controls the secondary screen GOA to apply the scan signal Vselect through the scan line, so that the switch transistor M2 is conducted (corresponding to that the secondary screen GOA is turned on). That is, the target path is connected. Therefore, because the secondary screen EOA does not send the display signal Vdata, and the drive module does not store the display signal Vdata either, the drive module cannot obtain the display signal Vdata to drive the secondary screen 12 to display the image. It may be understood that in a process of turning off the secondary screen EOA and turning on the secondary screen GOA, the secondary screen GOA in the secondary screen control unit is in the operating state.

It may be understood that, after the secondary screen EOA is turned off and the secondary screen GOA is turned on for a specific time, the secondary screen EOA is controlled to be turned on and the secondary screen GOA is controlled to be turned off. In this cycle, the secondary screen EOA and the secondary screen GOA are in the one-on one-off state periodically. Therefore, the secondary screen EOA and the secondary screen GOA are in the one-on one-off state periodically, so that not only a display difference between a primary screen and a secondary screen that occurs because the secondary screen GOA and the secondary screen EOA are in a different operating state for a long time from a primary screen GOA and a primary screen EOA can be avoided, but also a problem that the secondary screen displays no substantial image because the secondary screen EOA and the secondary screen GOA are in the one-on one-off state periodically, that is, the secondary screen flashes a white screen when the mobile phone is in a color inversion mode can be avoided.

In some other embodiments, in the circuit shown in FIG. 4, cutoff of the switch transistor M2 may be controlled by sending the low-level scan signal Vselect by using the secondary screen GOA, and conduction of the switch transistor M2 may be controlled by sending the high-level scan signal Vselect by using the secondary screen GOA. Correspondingly, when the secondary screen GOA sends a low-level signal to control cutoff of the switch transistor M2, the secondary screen EOA is controlled to be turned on; and when the secondary screen GOA sends a high-level signal to control conduction of the switch transistor M2, the secondary screen EOA is controlled to be turned off. It may be understood that when conduction and cutoff of the switch transistor M2 are controlled at a high level and a low level, the secondary screen GOA is always in the operating state (switches between the high level and the low level), and the secondary screen EOA is in the one-on one-off state periodically.

The following explains and describes some embodiments of this application with reference to the mobile phone 10 shown in FIG. 1 and FIG. 2 and the circuit structural diagram shown in FIG. 4.

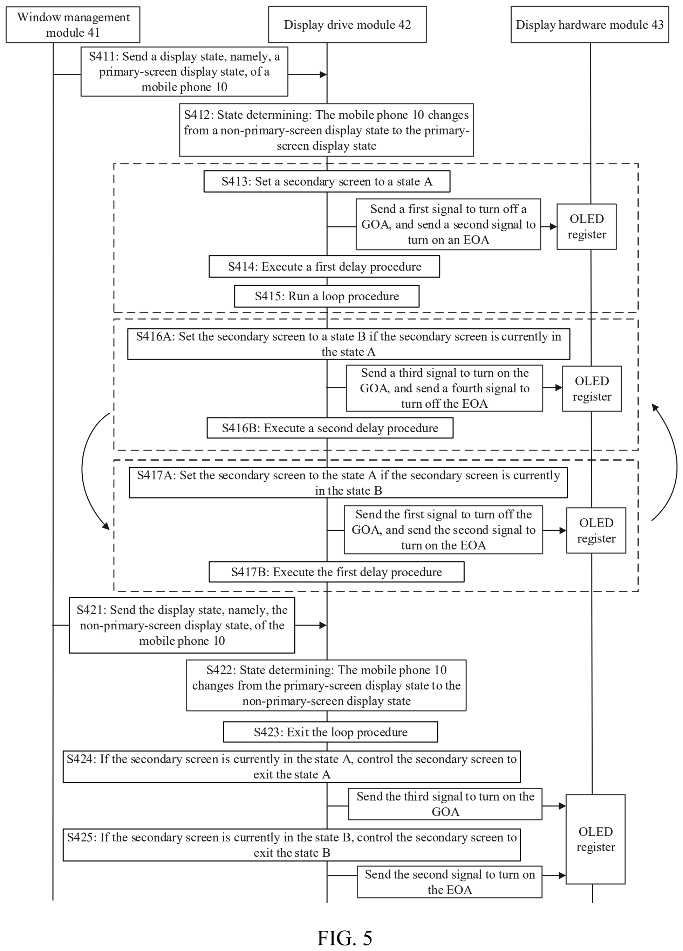

FIG. 5 is an interactive flowchart of a control method according to some embodiments of this application. As shown in FIG. 5, this procedure includes but is not limited to the following steps.

S411: A window management module 41 sends a display state, namely, a primary-screen display state, of a mobile phone 10 to a display drive module 42.

In some embodiments, the mobile phone 10 may detect a folding angle of an outward-foldable screen by using a sensor (for example, a magnetic sensor) in the mobile phone 10, and obtain a display state corresponding to the folding angle by using the window management module (for example, a fold screen manager (fold screen manager) in a window manager service (window manager service, WMS)) 41. For example, when the folding angle is 180 degrees to 150 degrees, the display state is a full-screen display state; and when the folding angle is 60 degrees to 0 degrees, the display state is the primary-screen display state.

In some embodiments, when the window management module 41 determines that the display state corresponding to the folding angle of the mobile phone 10 is the primary-screen display state, that is, a primary screen 11 displays an image, and a secondary screen 12 does not display an image, the window management module 41 sends the display state, namely, the primary-screen display state, of the mobile phone 10 to the display drive module 42.

S412: The display drive module 42 performs state determining, to determine that the mobile phone 10 changes from a non-primary-screen display state to the primary-screen display state.

In some embodiments, after receiving the primary-screen display state sent by the window management module 41, the display drive module 42 performs state determining, to determine that the mobile phone 10 changes from the non-primary-screen display state to the primary-screen display state. It may be understood that the non-primary-screen display state includes the full-screen display state and a secondary-screen display state. The full-screen display state indicates that the primary screen 11 and the secondary screen 12 simultaneously display images (for example, when the mobile phone 10 is in an unfolded state, the mobile phone 10 is in the full-screen display state). The secondary-screen display state indicates that the secondary screen 12 displays an image, and the primary screen 11 does not display an image (for example, when the mobile phone 10 is in a folded state and a self-portrait mode is turned on, the mobile phone 10 is in the secondary-screen display state).

S413: The display drive module 42 sets the secondary screen to a state A (an instance of a first state).

In some embodiments, when the display drive module 42 determines that the mobile phone 10 changes to the primary-screen display state, the secondary screen 12 is set to the state A. The state A is used to indicate that a secondary screen EOA is turned on and a secondary screen GOA is turned off.

In some embodiments, the display drive module 42 sends a first signal to an OLED register in a display hardware module 43 to drive the secondary screen GOA to be turned off. For example, the display drive module 42 may send the first signal to the OLED register through a mobile industry processor interface (mobile industry processor interface, MIPI). The first signal may be "0x12". For example, the display drive module 42 writes data "05 01 00 00 00 00 01 12" into the OLED register through the MIPI, to drive the secondary screen GOA to be turned off. In addition, the display drive module 42 sends a second signal to the OLED register to drive the secondary screen EOA to be turned on. For example, the first signal may be "0x84 0x0F". For example, the display drive module 42 writes data "15 01 00 00 00 00 02 84 0F" into the OLED register through the MIPI, to drive the secondary screen EOA to be turned on.

S414: The display drive module 42 executes a first delay procedure.

In some embodiments, after the secondary screen enters the state A, for example, a 25-second (corresponding to an instance of a first time interval) first delay procedure is executed, and step S415 is performed after the first delay procedure. It may be understood that the first delay procedure is executed, so that a state in which the secondary screen enters the state A may last for 25 seconds.

In some embodiments, when the display drive module 42 determines that the mobile phone 10 changes from the non-primary-screen display state to the primary-screen display state, the display drive module 42 first sets the secondary screen 12 to the state A. After the state A is set, the display drive module 42 runs a 1st first delay procedure, so that the secondary screen 12 maintains the state A to last for a time, for example, 25 seconds, of the first time interval corresponding to the first delay procedure. It can be learned that when the mobile phone 10 changes from the non-primary-screen display state to the primary-screen display state, the secondary screen 12 is in a 1st first time interval, and the secondary screen 12 is in the state A in the 1st first time interval.

It may be understood that steps S413 and S414 correspond to the 1st first time interval shown in FIG. 3.

S415: The display drive module 42 runs a loop procedure.

In some embodiments, after the secondary screen 12 maintains the state A to last for a 1st time interval corresponding to the 1st first delay procedure, that is, after the 1st first delay procedure ends at a 26th second, the display drive module 42 performs a loop procedure in steps S416A to S417B. For example, the display drive module 42 executes an instruction A, for example, "dsi_panel_enter_mode_cmd", to run the loop procedure.

It may be understood that an end of the 1st first delay procedure is an end moment of the 1st first time interval or a start moment of a 1st second time interval, for example, corresponding to a moment T0 shown in FIG. 3.

S416A: The display drive module 42 sets the secondary screen to a state B (an instance of a second state) if the display drive module 42 determines that the secondary screen is currently in the state A.

In some embodiments, in the loop procedure, the display drive module 42 sets the secondary screen to the state B if the display drive module 42 determines that the secondary screen is currently in the state A. The state B is used to indicate to turn off the secondary screen EOA and turn on the secondary screen GOA.

In some embodiments, the display drive module 42 sends a third signal to the OLED register to drive the secondary screen GOA to be turned on. For example, the third signal may be "0x13". For example, the display drive module 42 writes data "05 01 00 00 00 00 01 13" into the OLED register through the MIPI, to drive the secondary screen GOA to be turned on. In addition, the display drive module 42 sends a fourth signal to the OLED register to drive the secondary screen EOA to be turned off. For example, the fourth signal may be "0x84 0x03". For example, the display drive module 42 writes data "15 01 00 00 00 00 02 84 03" into the OLED register through the MIPI, to drive the secondary screen EOA to be turned off.

S416B: The display drive module 42 executes a second delay procedure.

In some embodiments, after the secondary screen enters the state B, for example, a 5-second second delay procedure is executed, and the loop procedure in step S415 is run again after the second delay procedure. It may be understood that the second delay procedure is executed, so that a state in which the secondary screen enters the state B may last for 5 seconds.

In some embodiments, when the display drive module 42 determines that the mobile phone 10 changes to the primary-screen display state, the secondary screen 12 is set to the state A, and for example, the 25-second first delay procedure is executed, so that the secondary screen 12 maintains the state A for 25 seconds. Subsequently, at the 26th second, the loop procedure is run. In this case, the secondary screen 12 is in the state A. Therefore, at the 26th second, the secondary screen 12 is correspondingly set to the state B, and for example, the 5-second second delay procedure is executed, so that the secondary screen 12 maintains the state B in a time period of 5 seconds from the 26th second to a 30th second (an instance of the second time interval).

It may be understood that, before the loop procedure is entered, the display drive module 42 sets the secondary screen 12 to the state A (step S413). To be specific, after the loop procedure is entered (step S415), corresponding to that the secondary screen 12 is in the state A, step S416A is first performed, so that the secondary screen 12 is set from the state A to the state B after entering the loop procedure. Then, step S416B is performed. The display drive module 42 runs a 1st second delay procedure, so that the secondary screen 12 maintains the state B for a time, for example, 5 seconds, of a second time interval corresponding to the second delay procedure.

In other words, the display drive module 42 runs the loop procedure at the end of the 1st first delay procedure (corresponding to the start moment of the 1st second time interval), and in the loop procedure, corresponding to determining that the secondary screen 12 is currently in the state A, the display drive module 42 changes the secondary screen 12 from the state A to the state B, and executes the 1st second delay procedure, so that the secondary screen 12 maintains the state B to last for the time of the second time interval corresponding to the second delay procedure.

It can be learned that, before the loop procedure is run, the secondary screen 12 is in the 1st first time interval shown in FIG. 3, and the secondary screen 12 is in the state A in the 1st first time interval. After the loop procedure is run, the secondary screen is first in the 1st second time interval shown in FIG. 3, and the secondary screen 12 is in the state B in the 1st second time interval.

S417A: The display drive module 42 sets the secondary screen to the state A if the display drive module 42 determines that the secondary screen is currently in the state B.

In some embodiments, in the loop procedure, the display drive module 42 sets the secondary screen to the state A if the display drive module 42 determines that the secondary screen is currently in the state B.

S417B: The display drive module 42 executes the first delay procedure.

In some embodiments, after the secondary screen enters the state A, for example, the 25-second first delay procedure is executed, and the loop procedure in step S415 is run again after the first delay procedure.

It may be understood that, in a process in which the display drive module 42 runs the loop procedure (step S415) to skip to steps S416A and S416B for a first time, the display drive module 42 sets the secondary screen 12 to the state B. To be specific, after step S416, corresponding to that the secondary screen 12 is in the state B, step S417A is performed. The display drive module 42 changes the secondary screen 12 from the state B to the state A. Then, step S417B is performed. The display drive module 42 runs the 2nd first delay procedure, so that the secondary screen 12 maintains the state A for the time, for example, 25 seconds, of the first time interval corresponding to the first delay procedure.

In other words, the display drive module 42 skips to steps S417A and S417B at the end (corresponding to the start moment of the 2nd first time interval) of the 1st second delay procedure. To be specific, the display drive module 42 changes the secondary screen 12 from the state B to the state A, and executes the 2nd first delay procedure, so that the secondary screen 12 maintains the state A to last for the time of the first time interval corresponding to the first delay procedure.

It can be learned that before the loop procedure is run, the secondary screen 12 is in the 1st first time interval shown in FIG. 3, and the secondary screen 12 is in the state A in the 1st first time interval. After the loop procedure is run, the secondary screen 12 is first in the 1st second time interval shown in FIG. 3, and the secondary screen 12 is in the state B in the 1st second time interval. Then, the secondary screen 12 is in the 2nd first time interval shown in FIG. 3, and the secondary screen 12 is in the state A in the 2nd first time interval. By analogy, after the loop procedure is run, the secondary screen 12 is successively in time intervals after the 1st first time interval and the corresponding state A or state B.

S421: The window management module 41 sends a display state, namely, the non-primary-screen display state, of the mobile phone 10 to the display drive module 42.

In some embodiments, when determining that the display state corresponding to the folding angle of the mobile phone 10 is the non-primary-screen display state, the window management module 41 sends the display state, namely, the non-primary-screen display state, of the mobile phone 10 to the display drive module 42.

S422: The display drive module 42 performs state determining, to determine that the mobile phone 10 changes from the full-screen display state to the non-primary-screen display state.

In some embodiments, after receiving the non-primary-screen display state sent by the window management module 41, the display drive module 42 performs state determining, to determine that the mobile phone 10 changes from the full-screen display state to the non-primary-screen display state.

S423: The display drive module 42 exits the loop procedure.

In some embodiments, when determining that the mobile phone 10 changes to the non-primary-screen display state, the display drive module 42 exits the loop procedure. For example, the display drive module 42 executes an instruction B, for example, "dsi_panel_exit_mode_cmd", to exit the loop procedure.

S424: If the display drive module 42 determines that the secondary screen is currently in the state A, the display drive module 42 controls the secondary screen to exit the state A.

In some embodiments, in a process of exiting the loop procedure, if the display drive module 42 determines that the secondary screen is currently in the state A, the display drive module 42 controls the secondary screen to exit the state A. Specifically, the display drive module 42 sends the third signal to the OLED register in the display hardware module 43, to drive the secondary screen GOA to be turned on, that is, the secondary screen EOA and the secondary screen GOA are simultaneously turned on, to control the secondary screen 12 to display an image.

S425: If the display drive module 42 determines that the secondary screen is currently in the state B, the display drive module 42 controls the secondary screen to exit the state B.

In some embodiments, in a process of exiting the loop procedure, if the display drive module 42 determines that the secondary screen is currently in the state B, the display drive module 42 controls the secondary screen to exit the state B. Specifically, the display drive module 42 sends the second signal to the OLED register in the display hardware module 43, to drive the secondary screen EOA to be turned on, that is, the secondary screen EOA and the secondary screen GOA are simultaneously turned on, to control the secondary screen 12 to display an image.

It can be understood that, the secondary screen EOA and the secondary screen GOA are controlled to be in a one-on one-off state periodically, so that not only a display difference between the primary screen and the secondary screen that occurs because the secondary screen GOA and the secondary screen EOA are in a different operating state for a long time from a primary screen GOA and a primary screen EOA can be avoided, but also a problem that the secondary screen displays no substantial image because the secondary screen EOA and the secondary screen GOA are in the one-on one-off state periodically, that is, the secondary screen flashes a white screen when the mobile phone is in a color inversion mode can be avoided.

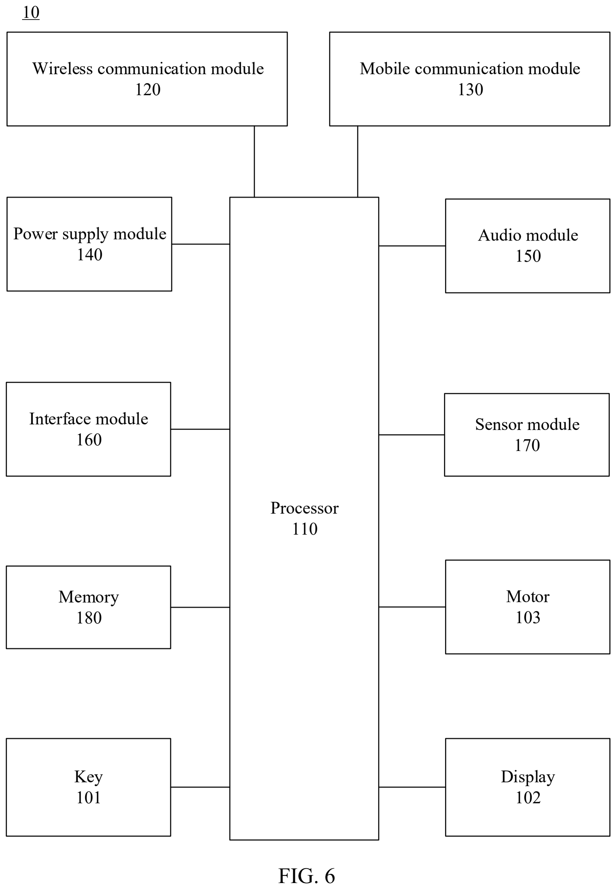

FIG. 6 is a schematic structural diagram of a mobile phone 10 according to some embodiments of this application. As shown in FIG. 6, the mobile phone 10 includes a processor 110, a power supply module 140, a memory 180, a mobile communication module 130, a wireless communication module 120, a sensor module 170, an audio module 150, an interface module 160, a key 101, a display 102, a motor 103, and the like.

The processor 110 may include one or more processing units, for example, may include a processing module or a processing circuit of a central processing unit (central processing unit, CPU), a graphics processing unit (graphics processing unit, GPU), a digital signal processor DSP, a micro-programmed control unit (micro-programmed control unit, MCU), an artificial intelligence (artificial intelligence, AI) processor, a field programmable gate array (field programmable gate array, FPGA), or the like. Different processing units may be independent devices, or may be integrated into one or more processors. A storage unit may be disposed in the processor 110, to store instructions and data. In some embodiments, the storage unit in the processor 110 is a cache memory 180.

The power supply module 140 may include a power supply, a power management component, and the like. The power supply may be a battery. The power management component is configured to: manage charging of the power supply, and supply power from the power supply to another module. In some embodiments, the power management component includes a charging management module and a power management module. The charging management module is configured to receive a charging input from a charger. The power management module is configured to be connected to the power supply, the charging management module, and the processor 110. The power management module receives an input from the power supply and/or the charging management module, to supply power to the processor 110, the display 102, the wireless communication module 120, and the like.

The mobile communication module 130 may include but is not limited to an antenna, a power amplifier, a filter, a low noise amplifier (low noise amplify, LNA), and the like. The mobile communication module 130 may provide a solution for wireless communication that is applied to the mobile phone 10 and that includes 2G/3G/4G/5G and the like. The mobile communication module 130 may receive an electromagnetic wave by using the antenna, perform processing such as filtering or amplification on the received electromagnetic wave, and transmit a processed electromagnetic wave to a modem processor for demodulation. The mobile communication module 130 may further amplify a signal modulated by the modem processor, and convert the signal into an electromagnetic wave by using the antenna for radiation. In some embodiments, at least some functional modules in the mobile communication module 130 may be disposed in the processor 110. In some embodiments, at least some functional modules in the mobile communication module 130 may be disposed in a same device as at least some modules in the processor 110.

The wireless communication module 120 may include an antenna, and send/receive an electromagnetic wave by using the antenna. The wireless communication module 120 may provide a solution for wireless communication that is applied to the mobile phone 10 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone 10 may communicate with a network and another device by using a wireless communication technology.

In some embodiments, the mobile communication module 130 and the wireless communication module 120 of the mobile phone 10 may be alternatively located in a same module.

The display 102 is configured to display a human-computer interaction interface, an image, a video, and the like. The display 102 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a quantum dot light emitting diode (quantum dot light emitting diodes, QLED), or the like.

The sensor module 170 may include an optical proximity sensor, a pressure sensor, a gyroscope sensor, a barometric pressure sensor, a magnetic sensor (detecting unfolding/folding of a foldable screen), an acceleration sensor, a distance sensor, a fingerprint sensor, a temperature sensor, a touch sensor, an ambient light sensor, a bone conduction sensor, and the like.

The audio module 150 is configured to: convert digital audio information into an analog audio signal for output, or convert an analog audio input into a digital audio signal. The audio module 150 may be further configured to encode and decode the audio signal. In some embodiments, the audio module 150 may be disposed in the processor 110 or some functional modules of the audio module 150 may be disposed in the processor 110. In some embodiments, the audio module 150 may include a speaker, an earpiece, a microphone, and a headset jack.

The interface module 160 includes an external memory interface, a universal serial bus (universal serial bus, USB) interface, a SIM card interface, and the like. The external memory interface may be configured to be connected to an external memory card such as a Micro SD card, to extend a storage capability of the mobile phone 10. The external memory card communicates with the processor 110 through the external memory interface, to implement a data storage function. The universal serial bus interface is configured for the mobile phone 10 to communicate with another device. The subscriber identity module card interface is configured to communicate with an SIM card mounted on the mobile phone 10, for example, read a phone number stored in the SIM card, or write a phone number into the SIM card.

In some embodiments, the mobile phone 10 further includes the key 101, the motor 103, an indicator, and the like. The key 101 may include a volume key, an on/off key, and the like. The motor 103 is configured to enable the mobile phone 10 to generate a vibration effect, for example, when the mobile phone 10 of a user is called, generate vibration to prompt the user to answer an incoming call of the mobile phone 10. The indicator may include a laser indicator, a radio frequency indicator, a light-emitting diode (light-emitting diode, LED) indicator, and the like.

It can be understood that the structure illustrated in this embodiment does not constitute a specific limitation on the mobile phone 10. In some other embodiments of this application, the mobile phone 10 may include more or fewer components than those shown in the figure, or combine some components, or split some components, or have different component arrangements. The components shown in the figure may be implemented by hardware, software, or a combination of software and hardware.

In some embodiments, an embodiment of this application further provides a computer-readable medium. The computer-readable medium stores program code. When the computer program code is run on a computer, the computer is enabled to perform the method in the foregoing aspects.

In some embodiments, an embodiment of this application further provides a computer program product. The computer program product includes computer program code. When the computer program code is run on a computer, the computer is enabled to perform the method in the foregoing aspects.

In the accompanying drawings, some structure or method features may be shown in a particular arrangement and/or order. However, it should be understood that such particular arrangement and/or sorting may not be required. Instead, in some embodiments, these features may be arranged in a manner and/or order different from that shown in the illustrative accompanying drawings. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolve the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated and described with reference to some preferred embodiments of this application, a person of ordinary skill in the art should understand that various modifications may be made to the embodiments in form and detail without departing from the scope of this application.

## Claims

1. A control method, applied to an electronic device, wherein the electronic device comprises an outward-foldable screen, the outward-foldable screen comprises a first screen and a second screen, the first screen comprises a first control unit configured to control the first screen to display an image, the second screen comprises a second control unit configured to control the second screen to display an image, the first control unit comprises a first signal module, a second signal module, and a drive module, the first signal module is configured to control connection/disconnection of a first path through which the second signal module communicates with the drive module, the second signal module sends a display signal to the drive module through the first path, the drive module is configured to: receive the display signal, and control, based on the display signal, the first screen to display an image, and the method comprises:
enabling the first signal module and the second signal module in the first control unit to run in an operating state alternately, corresponding to a first time period in which the second screen displays an image and the first screen does not display an image, wherein the first time period comprises N first time intervals and at least N-1 second time intervals, and the first time intervals and the second time intervals are continuously spaced apart from each other; and
the enabling the first signal module and the second signal module in the first control unit to run in an operating state alternately comprises:
in the first time interval, indicating, by the first control unit, the first signal module to send the display signal to the drive module, and indicating the second signal module to control the first path to be disconnected; and
in the second time interval immediately after the first time interval, indicating, by the first control unit, the first signal module to stop sending the display signal to the drive module, and indicating the second signal module to control the first path to be connected.

2. The method according to claim 1, wherein the method further comprises:
executing, by the first control unit, a first delay procedure in response to an indication signal indicating that the first control unit indicates the first signal module to send the display signal to the drive module and indicates the second signal module to control the first path to be disconnected, so that a first state in which the first signal module sends the display signal to the drive module and the second signal module controls the first path to be disconnected is maintained to last for a time corresponding to the first time interval; or
executing, by the first control unit, a second delay procedure in response to an indication signal indicating that the first control unit indicates the first signal module to stop sending the display signal to the drive module and indicates the second signal module to control the first path to be connected, so that a second state in which the first signal module stops sending the display signal to the drive module and the second signal module the first path to be connected is maintained to last for a time corresponding to the second time interval.

3. The method according to claim 2, wherein the enabling the first signal module and the second signal module in the first control unit to run in an operating state alternately, corresponding to a first time period in which the second screen displays an image and the first screen does not display an image comprises:
indicating, by the first control unit, that the first signal module and the second signal module are in the first state;
running a 1st first delay procedure, so that the first state is maintained to last for the time corresponding to the first time interval; and
running a loop procedure in response to that the 1st first delay procedure ends, wherein
the loop procedure comprises:
at a start moment of an ith second time interval, in response to determining that the first signal module and the second signal module are in the first state, the first control unit indicates the first signal module and the second signal module to change from the first state to the second state, and runs an ith second delay procedure, so that the second state is maintained to last for the time corresponding to the second time interval;
at a start moment of an (i+1)th first time interval, in response to determining that the first signal module and the second signal module are in the second state, the first control unit indicates the first signal module and the second signal module to change from the second state to the first state, and runs an (i+1)th first delay procedure, so that the first state is maintained to last for the time corresponding to the first time interval; and
i is an integer greater than or equal to 1.

4. The method according to claim 3, wherein the method further comprises:
determining that the electronic device enters a non-primary-screen display state, and exiting the loop procedure, wherein
during exiting of the loop procedure:
at a moment at which the loop procedure is exited, it is determined that the first signal module and the second signal module are in the first state, and the first control unit indicates the second signal module to control the first path to be connected; or
at a moment at which the loop procedure is exited, it is determined that the first signal module and the second signal module are in the second state, and the first control unit indicates the first signal module to send the display signal to the drive module.

5. The method according to any one of claims 1 to 4, wherein the method further comprises:
the first time interval is greater than the second time interval.

6. The method according to claim 5, wherein the electronic device is in a color inversion mode.

7. The method according to claim 5, wherein the first signal module is an emit gate driver on array (EOA), and the second signal module is a gate driver on array (GOA).

8. The method according to claim 5, wherein
the first path is provided with a first switch, and the second signal module is configured to control the first switch to be turned on/off;
one terminal of the first switch is connected to the first signal module, the other terminal is connected to a first capacitor and a second switch in the drive module, and the first capacitor or the first signal module is configured to control the second switch to be turned on/off; and
the first screen may display an image corresponding to that the second switch is in an on state.

9. A computer-readable storage medium, wherein the readable storage medium stores instructions, and when the instructions are executed on an electronic device, the electronic device is enabled to implement the method according to any one of claims 1 to 8.

10. An electronic device, comprising:
a memory, configured to store instructions to be executed by one or more processors of the electronic device; and
a processor, being one of the processors of the electronic device and configured to execute the instructions stored in the memory, to implement the method according to any one of claims 1 to 8.
